# EUROPEAN PATENT APPLICATION

(11) **EP 4 559 597 A1**
(43) Date of publication of application: **28.05.2025**
(21) Application number: 24214232.1
(22) Date of filing: 20.11.2024
(51) Int. Cl.: B22F 3/11, B22F 3/17, B22F 3/18, B22F 7/06, C22C 1/08, B64C 25/00, B64F 5/10, B22F 3/16, B22F 3/02, B22F 7/00, C22C 33/02

(54) **METHOD FOR NEAR NET SHAPE MANUFACTURING HIGH STRENGTH TITANIUM COMPONENTS**

(30) Priority: 20.11.2023 US 202318514486
(71) Applicant: Goodrich Corporation, Charlotte, NC 28217-4578 (US)
(72) Inventor: HAYNES, Noel, Etobicoke, Ontario, M8Y 0B5 (CA); MIRONETS, Sergey, Burlington, ON, L7R 0E9 (CA)
(74) Representative: Dehns

(57) **Abstract**

A method is disclosed herein. The method includes mixing (302) a plurality of metal powders to form a blended powder, pressing (304) the blended powder to form a porous sheet of compacted powder, cutting (306) the porous sheet to form a plurality of cross sections, performing (310) a diffusion bonding process on the plurality of cross sections to bond the plurality of cross sections together forming a near net shape preform, the near net shape preform being denser than the porous sheet, and (312) consolidating the near net shape preform to form a full density near net shape component.

## Description

### FIELD

The present disclosure generally relates the manufacture of aerospace components via additive manufacturing processes, and more particularly, to methods for near net shape manufacturing of aerospace components.

### BACKGROUND

Iron conventionally acts as a stabilizer when combined with another metal or metal alloy to increase the strength of the metal or metal alloy. However, typical manufacturing processes limit the percentage of iron in the final alloy. Iron tends to segregate in the metal alloy during conventional manufacturing processes as the percentage of iron by weight increases. Furthermore, conventional manufacturing processes limit the final shape of titanium alloys containing iron to simple shapes.

### SUMMARY

Disclosed herein is a method including mixing a plurality of metal powders to form a blended powder, pressing the blended powder to form a porous sheet of compacted powder, cutting the porous sheet to form a plurality of cross sections, performing a diffusion bonding process on the plurality of cross sections to bond the plurality of cross sections together forming a near net shape preform, the near net shape preform being denser than the porous sheet, and consolidating the near net shape preform to form a full density near net shape component.

In various embodiments, the plurality of metal powders includes powdered metals or powdered metal alloys. In various embodiments, the plurality of metal powders include titanium, aluminum, vanadium, and iron. In various embodiments, the pressing includes cold rolling the blended powder to form the porous sheet of compacted powder.

In various embodiments, the cutting is performed by one of a laser, a water jet, or a saw. In various embodiments, the cutting the porous sheet further forms a plurality of scrap. In various embodiments, the method further includes processing the plurality of scrap for reuse to form a processed scrap and mixing the processed scrap with the plurality of metal powders.

In various embodiments, the diffusion bonding process includes stacking the plurality of cross sections to form a stack of cross sections, and sintering the stack of cross sections. In various embodiments, the diffusion bonding process includes stacking the plurality of cross sections to form a stack of cross sections, and applying a vacuum to the stack of cross sections.

In various embodiments, the diffusion bonding process includes stacking the plurality of cross sections to form a stack of cross sections, and using a laser or ultrasonic device to bond the stack of cross sections. In various embodiments, the method further includes processing the full density near net shape component to form a final product. In various embodiments, the processing includes one of machining, surface treatment, and thermal treatment.

Also disclosed herein is a method of manufacturing high strength components, the method including forming a porous sheet of compacted metal powder from a blended plurality of metal powders, cutting the porous sheet to form a plurality of cross sections, stacking the plurality of cross sections to form a stack, bonding the stack by applying a heat to the stack to form a near net shape preform, and consolidating the near net shape preform to form a full density near net shape component.

In various embodiments, the blended plurality of metal powders include titanium, aluminum, vanadium, and iron. In various embodiments, the cutting is performed by one of a laser, a water jet, or a saw. In various embodiments, the bonding further comprises applying a vacuum to the stack. In various embodiments, the cutting further forms a plurality of scrap, the method further includes crumbling the plurality of scrap and mixing the crumbled plurality of scrap with the blended plurality of metal powder to form the blended plurality of metal powders.

In various embodiments, the method further includes processing the full density near net shape component to form a final product. In various embodiments, the processing includes one of machining, surface treatment, and thermal treatment. In various embodiments, the consolidating the near net shape further includes introducing the near net shape into a furnace, and heating the furnace to a first temperature.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft in accordance with various embodiments that may comprise aircraft systems and components, in accordance with various embodiments.
FIGS. 2A, 2B, 2C, 2D, 2E, and 2F illustrate a method of manufacturing near net shapes of complex configuration components, in accordance with various embodiments.
FIG. 3 illustrates a flow diagram of a method for manufacturing near net shapes of complex configuration components, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a method of manufacturing a metal alloy including a larger percentage of iron than is typically possible using conventional manufacturing techniques. Using conventional manufacturing techniques, iron content of various alloys (e.g., Ti-1Al-8V-Fe also referred to as Ti 185) is limited to less than 2.5% by weight of the final product. For example, iron tends to segregate and clump together in the melting pot when manufacturing Ti 185 having an iron content of greater than 2.5% by weight. Furthermore, conventional manufacturing techniques have slow build rates and are limited to simple shapes. In various embodiments, the processes disclosed herein increase the speed of the build, allow for complex shapes to be formed, and include more iron as a percentage of weight in the final product which tends to produce a stronger component.

In various embodiments, a unique powder metallurgy processing and diffusion bonding process may be used to form near net shape components. That is, the initial component is close in shape to the final component. In various embodiments, the process begins by blending a plurality of metal powders. In various embodiments, the metal powders may include one or more metal and/or metal alloy powders. In various embodiments, the blended metal powders may be cold rolled into a compacted sheet. In various embodiments, the compacted sheet may be cut into a desired shape. In various embodiments, the scrap from the cutting process may crushed and/or blended with the plurality of metal powders. In various embodiments, a diffusion bonding process may be performed to form a near fully dense shape, or a near net shape. In various embodiments, a plurality of cut sheets may be stacked to form a desired shape. In various embodiments, the stack of cut sheets may be laminated and/or bonded to form a near fully dense shape, or a near net shape. In various embodiments, a forging die may be used to fully densify and shape the near fully dense shape may be place into a final component.

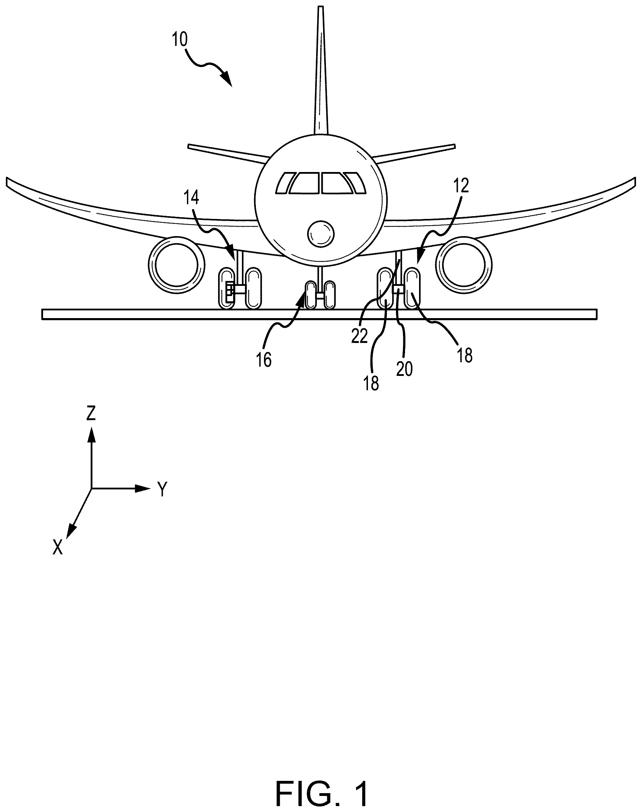

Referring now to FIG. 1, an aircraft 10 that may comprise aircraft systems and components is illustrated, in accordance with various embodiments. For example, aircraft 10 may comprise one or more landing gear such as landing gear 12, landing gear 14, and landing gear 16. Landing gear 12, landing gear 14, and landing gear 16 may generally support aircraft 10 when aircraft 10 is not flying, allowing aircraft 10 to taxi, take off, and land without damage and may comprise wheels and an oleo strut, also referred to as a shock strut, comprising a strut cylinder and a strut piston filled with a hydraulic fluid. For example, landing gear 12 may include wheels 18 coupled by an axle 20 and a shock strut 22. In operation, aircraft landing gear may experience significant forces such as landing loads and aerodynamic loads and may tend to benefit from high performance alloy construction. In various embodiments, aircraft 10 components such as landing gear 12 and shock strut 22 may comprise complex geometries tending to benefit from additive manufacturing techniques.

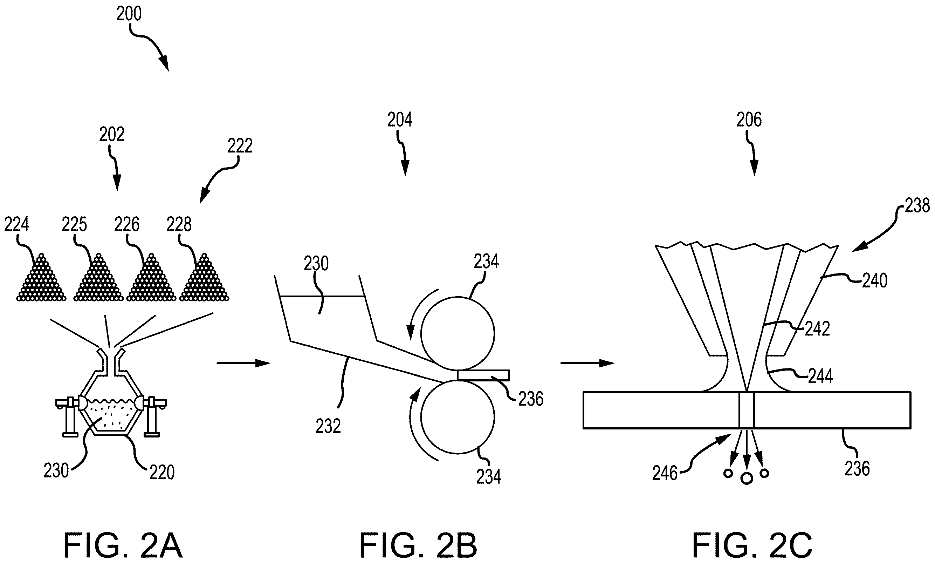

Referring now to FIGS. 2A-2F, a method 200 of manufacturing near net shapes of complex configuration components is illustrated, in accordance with various embodiments. At step 202, a plurality of metal powders are mixed together. At step 204, the blended metal powders are pressed into a sheet of compacted powder. At step 206, the sheet of compacted powder is cut to form a metal shape. At step 208, a diffusion bonding process is performed to bond a plurality of metal shapes into a near net shape. As described herein, step 210 and step 212 are sub-steps of the diffusion bonding process of step 208. At step 210, in various embodiments, the plurality of metal shapes may be stacked one on top of the other to form a stack of metal shapes. At step 212, in various embodiments, the stack of metal shapes may be placed in a sintering furnace to bond and densify the stack of metal shapes into a near fully dense net shape component. At step 214, the near fully dense shape is forged into a final component. At step 216, the final component may be installed or used (e.g., on aircraft 10).

Referring first to FIG. 2A and step 202, a plurality of metal powders 222 are placed into a mixer 220. In various embodiments, mixer 220 may be a blender, an industrial mixer, a horizontal mixer, a spiral mixer, or a planetary mixer, among others. In various embodiments, the plurality of metal powders may include titanium hydride (Ti₂H), aluminum (Al), vanadium (V), iron (Fe), among others. For example, the plurality of metal powders 222 may include a first amount 224 of a Ti₂H powder, a second amount 225 of an Al powder, a third amount 226 of a V powder, and a fourth amount 228 of a Fe powder. First amount 224, second amount 225, third amount 226, and fourth amount 228 of the plurality of metal powders 222 are based on the specific metal alloy being used where each of amount 224, 225, 226, 228 are percentages of each element in the metal alloy. In various embodiments, fewer elements may be used. In various embodiments, more elements may be used.

Mixer 220 mixes first amount 224, second amount 225, third amount 226, and fourth amount 228 of the plurality of metal powders 222 into a mixed powder 230. In various embodiments, mixed powder 230 may be evenly mixed with each of the plurality of metal powders 222 being evenly distributed throughout. In various embodiments, mixed powder 230 may be unevenly mixed with different amounts, or clumps, of each of the plurality of metal powders 222 being present in different portions of mixed powder 230.

Referring to FIG. 2B and step 204, mixed powder 230 is pressed into a sheet of compacted powder. In various embodiments, mixed powder 230 may be cold rolled to form the sheet of compacted powder comprised of mixed powder 230. Mixed powder 230 is placed into a hopper 232 that feeds mixed powder 230 to one or more rollers 234 to form a porous sheet 236 of compacted powder. In various embodiments, hopper 232 may be gravity fed to move mixed powder 230 toward rollers 234. In various embodiments, hopper 232 may be belt fed to move mixed powder 230 toward rollers 234. In various embodiments, hopper 232 may be vibrated to move mixed powder 230 toward rollers 234. In various embodiments, porous sheet 236 may be a low density porous sheet 236. Rollers 234 apply a first pressure to mixed powder 230 to compress mixed powder 230 into porous sheet 236. The first pressure applied by rollers 234 may vary depending on the metal alloy that is used.

In various embodiments, rollers 234 apply the first pressure to mixed powder 230 without applying additional heat to mixed powder 230. This results in mixed powder 230 forming into porous sheet 236 through interlocking of the plurality of metal powders 222 caused by the first pressure from rollers 234. In various embodiments, rollers 234 apply the first pressure to mixed powder 230 while applying heat at a first temperature. First temperature is lower than a reaction temperature for the specific metal alloy so that porous sheet 236 is formed by the mechanical interlocking of the plurality of metal powders 222 and not by a reaction in response to the heat. The mechanical interlocking of the plurality of metal powders 222 provides sufficient mechanical strength to keep porous sheet 236 intact for further processing. The mechanical interlocking of the plurality of metal powders 222 further provides insufficient mechanical strength to prevent porous sheet 236 from being broken and reused in later processing.

Referring to FIG. 2C and step 206, porous sheet 236 is cut into a desired shape by a water jet, a laser jet, a saw, or other cutting method. A laser jet 238 is illustrated in FIG. 2C for description, but any cutting method may be used to cut porous sheet 236 to the desired shape. Laser jet 238 includes a nozzle 240, a laser beam 242, and an assist gas 244. Nozzle 240 confines and directs laser beam 242 and assist gas 244 to a portion of porous sheet 236 to be cut. Laser jet 238 forms a cut 246 through porous sheet 236. Using this method, the desired shape may be a simple shape (e.g., a circle, a square, etc.) or a complicated shape having many angles and patterns. Each porous sheet 236 is cut into a cross section of a final desired shape. That is, a plurality of porous sheets 236 may be cut into different shapes so that when they are stacked one on top of the other, the plurality of cut porous sheets 236 resemble the final desired shape. Cutting the plurality of porous sheets 236 further creates scrap from the portions of each of the plurality of porous sheets 236. The scrap may be crushed and returned to mixer 220 to be mixed into mixed powder 230.

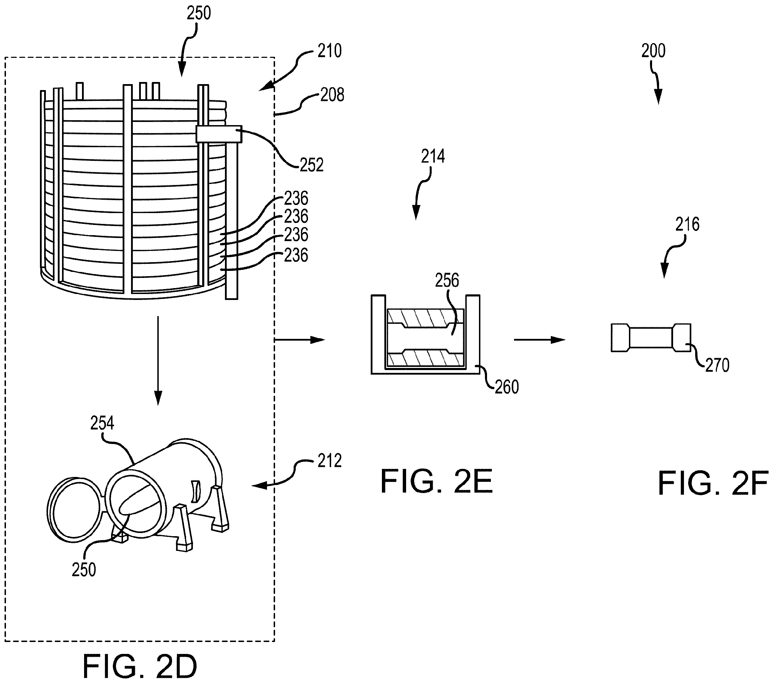

Referring to FIG. 2D and step 208, a diffusion bonding process is performed to bond the plurality of cut porous sheets 236 into a near net shape. As described herein, step 210 and step 212 are sub-steps of the diffusion bonding process of step 208. Other diffusion bonding processes are contemplated. In various embodiments, at step 210, the plurality of cut porous sheets 236 may be stacked one on top of the other to form a stack 250 of cut porous sheets 236. In various embodiments, a form 252 may be used to secure stack 250. In various embodiments, stack 250 may be further compressed (e.g., by a press, a hydraulic press, etc.) In various embodiments, at step 212, stack 250 may be placed in a sintering furnace 254 to bond and densify stack 250, and more specifically the plurality of cut porous sheets 236, into a near fully dense net shape component. Sintering furnace 254 may heat stack 250 to a first temperature sufficient to bond and densify the plurality of cut porous sheets 236 to one another.

In various embodiments, the diffusion bonding process may be performed by other methods. The diffusion bonding process results in stack 250, and the plurality of cut porous sheets 236 in stack 250, being denser than before the diffusion bonding process. That is, stack 250 is processed into a near fully dense shape 256.

Referring to FIG. 2E and step 214, the near fully dense shape 256 is forged into a final component 270. The near fully dense shape 256 is placed in a forge 260 and heated to a second temperature. In various embodiments, a second pressure is applied to the near fully dense shape 256. The second temperature combined with the second pressure forms the nearly fully dense shape into final component 270. In various embodiments, the forging process further shapes and defines near fully dense shape 256 into final component 270. As illustrated in FIG. 2E, forge 260 compresses the center of near fully dense shape 256 more than the outside edges resulting in a "barbell" shaped component.

Referring to FIG. 2F and step 216, final component 270 may be installed or used (e.g., on aircraft 10). Final component 270 may include higher concentrations of one or more elements than is possible using other manufacturing methods. For example, titanium 185 having an iron content of greater than 2.5% by weight (e.g., 5%) is possible without the iron clumping as occurs in a melting process. While this example includes a simple shape (i.e., a cylinder and a "barbell" shape) it should be appreciated that the systems and methods described herein are cable of forming complex shapes with greater iron content.

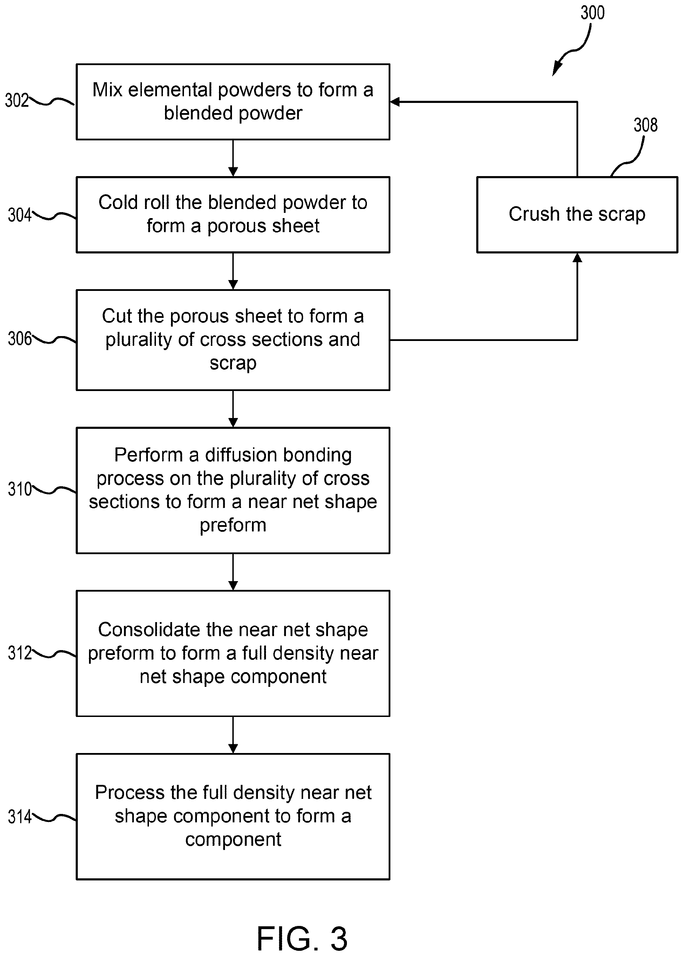

Referring now to FIG. 3, a method 300 of manufacturing near net shapes of complex configuration components is illustrated, in accordance with various embodiments. In various embodiments, method 300 may be performed using the tools and materials described above with respect to FIGS. 2A-2F. In various embodiments, method 300 may be performed using different tools while being with the scope of this disclosure.

At block 302, a plurality of metal powders are combined and mixed to form a blended powder. The plurality of metal powders may be mixed in different percentages that are used in different metal alloys. In various embodiments, the plurality of metal powders may include titanium hydride (Ti₂H), aluminum (Al), vanadium (V), and iron (Fe) to form titanium 185. In various embodiments, the metal powders may be combined in a blender or a mixer.

At block 304, the blended powder is pressed, or compressed, to form a porous sheet. A first pressure is applied to the blended powder to press the blended powder causing the powder to mechanically interlock. In various embodiments, the blended powder may be cold rolled to form the porous sheet. That is, the first pressure may be applied by one or more rollers operating at a first temperature that is below the temperature at which a chemical reaction occurs in the blended powder. The porous sheet has a strength due to the mechanical interlocking of the pressed, blended powder.

At block 306, the porous sheet is cut to form a plurality of cross sections and scrap. In various embodiments, each of the plurality of cross sections may be a different shape than each adjacent cross section. In various embodiments, each of the plurality of cross sections may be identical to each adjacent cross section. In various embodiments, the porous sheet may be cut by a water jet, a laser beam, a saw, or other fine cutting tool. This allows the porous sheet to be cut into detailed patterns.

At block 308, the scrap produced by the cutting process is crushed. The crushed scrap may then be mixed into the blended powder at block 302. The mechanical interlocking of the scrap allows the scrap to be crushed as no chemical process or chemical bonding occurred.

At block 310, a diffusion bonding process is performed on the plurality of cross sections to form a near net shape preform. That is, the near net shape preform is a single component formed from the plurality of cross sections by the diffusion process. In various embodiments, the near net shape preform may increase in density in response to the diffusion bonding process. However, further densifying of the near net shape preform will be performed before the near net shape preform can be used. In various embodiments, the plurality of cross sections may be placed adjacent each other to form a stack of cross sections. The stack of cross sections may then be heated to a second temperature, such as in a sintering furnace for example. Heating the stack to the second temperature induces a chemical reaction or chemical bonding of the cross sections that causes each of the cross sections to bond to each of the adjacent cross sections. This forms the near net shape preform.

In various embodiments, a vacuum may be applied to the stack of cross sections before heating the stack of cross sections. In various embodiments, a laser may be used to bond the stack of cross section. In various embodiments, an ultrasonic device may be used to bond the stack of cross sections.

At block 312, the near net shape preform is consolidated to form a full density near net shape component. That is, a consolidation process is performed to increase the density of the near net shape to the desired density. In various embodiments, the consolidation process includes introducing the near net shape preform into a furnace heated to a third temperature causing the near net shape preform to further densify and form the full density near net shape component. In various embodiments, a second pressure may be applied to the near net shape preform while in the furnace.

At block 314, the full density near net shape component is processed to form a component. The processing may include sanding, polishing, grinding, honing, surface treatments, thermal treatments, machining, or other finishing processes. The component may be used and/or installed after the processing is complete.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method, comprising:
Mixing (302) a plurality of metal powders to form a blended powder;
Pressing (304) the blended powder to form a porous sheet of compacted powder;
cutting (306) the porous sheet to form a plurality of cross sections;
performing (310) a diffusion bonding process on the plurality of cross sections to bond the plurality of cross sections together forming a near net shape preform, the near net shape preform being denser than the porous sheet; and
consolidating (312) the near net shape preform to form a full density near net shape component.

2. The method of claim 1, wherein the plurality of metal powders includes powdered metals or powdered metal alloys, or wherein the plurality of metal powders includes titanium, aluminum, vanadium, and iron.

3. The method of claim 1 or 2, wherein the pressing (304) includes cold rolling the blended powder to form the porous sheet of compacted powder.

4. The method of any preceding claim, wherein the cutting is performed by one of a laser, a water jet, or a saw, or wherein the cutting the porous sheet further forms a plurality of scrap.

5. The method of claim 4, further comprising:
processing the plurality of scrap for reuse to form a processed scrap; and
mixing the processed scrap with the plurality of metal powders.

6. The method of any preceding claim, wherein the diffusion bonding process comprises:
stacking the plurality of cross sections to form a stack of cross sections; and
sintering the stack of cross sections, or wherein the diffusion bonding process comprises:
stacking the plurality of cross sections to form a stack of cross sections; and
applying a vacuum to the stack of cross sections, or wherein the diffusion bonding process comprises:
stacking the plurality of cross sections to form a stack of cross sections; and
using a laser or ultrasonic device to bond the stack of cross sections.

7. The method of any preceding claim, further comprising:
processing the full density near net shape component to form a final product.

8. The method of claim 7, wherein the processing includes one of machining, surface treatment, and thermal treatment.

9. A method of manufacturing high strength components, the method comprising:
forming a porous sheet of compacted metal powder from a blend of a plurality of metal powders;
cutting the porous sheet to form a plurality of cross sections;
stacking the plurality of cross sections to form a stack;
bonding the stack by applying a heat to the stack to form a near net shape preform; and
consolidating the near net shape preform to form a full density near net shape component.

10. The method of claim 9, wherein the blended plurality of metal powders includes titanium, aluminum, vanadium, and iron.

11. The method of claim 9 or 10, wherein the cutting is performed by one of a laser, a water jet, or a saw.

12. The method of claim 9, 10 or 11, wherein the bonding further comprises applying a vacuum to the stack.

13. The method of any of claims 9 to 12, wherein the cutting further forms a plurality of scrap, the method further comprising:
crumbling the plurality of scrap; and
mixing the crumbled plurality of scrap with the blended plurality of metal powder to form the blended plurality of metal powders.

14. The method of any of claims 9 to 13, further comprising:
processing the full density near net shape component to form a final product, and optionally
wherein the processing includes one of machining, surface treatment, and thermal treatment.

15. The method of any of claims 9 to 14, wherein the consolidating the near net shape further comprises:
introducing the near net shape into a furnace; and
heating the furnace to a first temperature.
